(19)

Europäisches
Patentamt
European
Patent Office
Office européen
des brevets

(11) **EP 1 758 285 A1**

(12) **EUROPEAN PATENT APPLICATION**

(43) Date of publication:
**28.02.2007 Bulletin 2007/09**

(51) Int Cl.:
**H04J 13/04** (2006.01)    H04J 13/00 (2006.01)

(21) Application number: **06017791.2**

(22) Date of filing: **25.08.2006**

| | |
|---|---|
| (84) Designated Contracting States:<br>**AT BE BG CH CY CZ DE DK EE ES FI FR GB GR**<br>**HU IE IS IT LI LT LU LV MC NL PL PT RO SE SI**<br>**SK TR**<br>Designated Extension States:<br>**AL BA HR MK YU**<br><br>(30) Priority: **26.08.2005 CN 200510093526**<br><br>(71) Applicant: **NTT DoCoMo, Inc.**<br>**Chiyoda-ku**<br>**Tokyo 100-6150 (JP)** | (72) Inventors:<br>• **Dai, Xiaoming**<br>**South Rd**<br>**Haidian District**<br>**Beijing 100080 (CN)**<br>• **Chen, Lan**<br>**South Rd**<br>**Haidian District**<br>**Beijing 100080 (CN)**<br><br>(74) Representative: **Zimmermann, Tankred Klaus et al**<br>**Schoppe, Zimmermann, Stöckeler & Zinkler**<br>**Patentanwälte**<br>**Postfach 246**<br>**82043 Pullach bei München (DE)** |

(54) **Method and system for generating sequences with specific characteristics using adaptive genetic algorithm**

(57)    The present invention relates to a method for generating sequences, wherein the sequences are used in a communication system and the method comprises the following steps: 1) Generating a plurality of sequences with a predetermined length randomly (S101); 2) Computing a specific parameter value of each sequence (S102); 3) Selecting a plurality of sequences whose computed specific parameter value accords with a certain conditions (S103); 4) mutating the selected sequences with an adaptive genetic algorithm and adaptively selecting the sequences with the mutated and optimized specific parameter value according to the probability (S104,S105); 5) Repeating setp 2) to step 4) until the predetermined number of times and selecting the sequences with the optimal specific parameter value among the final sequences as the output sequences (S106). The present invention provides a system for generating sequences with specific characteristics. According to the present invention, sequences with specific characteristics can be obtained in a broad range and the present invention is highly adaptive and versatile. Once the evaluation indicator corresponding to the specific characteristic is designated, sequences used in many fields can be found.

Fig. 1

**Description**

Field of the Invention

The present invention relates to a method and system for generating sequences, especially to a method and system for generating sequences with low autocorrelation function and low sidelobe using adaptive genetic algorithm.

Background

Sequences such as pseudorandom sequence with specific length are widely used in many science and project fields, such as in the wireless communication, the satellite communication and the optical fiber communication, etc..

Since the frequency of the digital baseband signal is high, the new generation broadband wireless communication system requires for sequences with high performance so as to satisfy specific needs, for example, sequences with good aperiodic autocorrelation function characteristic and low sidelobe for cell selection, synchronization and channel estimation, etc.

Currently, two types of methods are available to design sequences with specific characteristics. The first method generates this kind of sequences with exhaustive search. However, generally the length of this kind of sequences is comparatively short, since for a sequence with the length L, there are $2^L$ probabilities. Accordingly, for a sequence with L=64, the number of probabilities is $2^{64}$ = 1.8447e+019, which is far beyond the current computing capability, while generally the sequence length of the new generation broadband wireless communication system is more than 64.

The second method generates the sequences with a fixed length (63, 127 etc.) with theory of numbers such as Golay code. However, this method cannot generate sequences of any length with low autocorrelation function and cannot meet the requirements of different wireless communication system designs.

Currently (even in the foreseeable future), it is impossible to generate a 128-bit downlink synchronization sequence used in Wimax with exhaustive search.

Therefore, a method and system that can overcome the above disadvantages and generate sequences with specific characteristics is needed.

Brief Description of the Invention

One purpose of the present invention is to provide a method and system for generating sequences with specific characteristics using adaptive genetic algorithm, so that sequences of different length and different amount and with near theoretical value performance can be generated and as a result, the communication quality is improved.

Therefore, the present invention provides a method for generating sequences, wherein the sequences are used in a communication system. The method comprises following steps:

    1) generating a plurality of sequences with a predetermined length randomly;
    2) computing a specific parameter value of each sequence;
    3) selecting a plurality of sequences whose computed specific parameter value accords with a certain condition;
    4) mutating the selected sequences with an adaptive genetic algorithm and adaptively selecting the sequences with the mutated and optimized specific parameter value according to the probability;
    5) repeating setp 2) to step 4) until a predetermined number of times and selecting the sequences with the optimal specific parameter value among the final sequences as output sequences.

Another step between the step 3) and step 4) performs crossover over operation on the selected plurality of sequences.

The specific parameter is relative to the autocorrelation function.

The specific parameter is the fitness and its computation formula is:

$$fitness(j) = \sum_{\tau=1}^{L-1} \theta_{u,u}(\tau)^2 + \beta \cdot PSL_j^2 \qquad 0 \le j \le \text{P-1}$$

$$\theta_{u,u}(\tau) = \sum_{t=0}^{L-1-\tau} u(t)u(t+\tau) \quad, \quad PSL_j = \max \theta_{u,u}(\tau)^2$$

wherein $\theta_{u,u}(\tau)$ is the autocorrelation function of each sequence, j is the serial number of the sequence, P is the whole number of the sequences, L is the length of each sequence, $PSL_j$ is the peak sidelobe value of each sequence and β is the equilibrium coefficient for balancing the sum of the peak sidelobe with the autocorrelation value.

The adaptive genetic mutation comprises following steps:

a) computing the fitness of a sequence j before mutation;
b) mutating the sequence j and getting a sequence j' while maintaining a backup of the sequence j, computing the fitness of the sequence j' and generating a random number r, wherein 0<r<1;
c) determining whether the fitness of the sequence j' is less than that of the sequence j, with r>$P_a$;
d) if yes, accepting the mutated sequence j'; if no, rejecting the mutated sequence j' and maintaining the former sequence j;
e) repeating steps a) to d) and continuing to mutate other sequences;

wherein j is the serial number of the sequence, $P_a$ is a predetermined value.

The step 3) may comprise the following steps:

I) generating a random number r, and setting the initial numbers of integers a and j as 0, wherein 0<r<1;

II) computing $\dfrac{P * fitness(j)}{\sum_{j=0}^{P-1} fitness(j)}$ , if the result is less than r, putting the sequence to the next generation population and setting the serial number of the selected sequence in the new population to a and then computing a=a+1 and proceeding to step III); if the result is equal to or bigger than r, determining the current value ofj, if j<P-1, computing j=j+1; if j is equal to or bigger than P-1, computing j=j-P+1; and then returning to step I); and thus the sequence in the next operation becoming the next sequence and operating each sequence with this cycle order;

III) determining whether the current serial number a is bigger than or equal to P-1, if yes, proceeding to step 4); if no, determining the current value of j, if j<P-1, computing j=j+1; if j is equal to or bigger than P-1, computing j=j-P+1; and then returning to step I).

The sequences are the downlink synchronization sequences in the wireless communication system.
The sequences are the uplink synchronization sequences in the wireless communication system.
The present invention also provides a system for designing and generating sequences with specific characteristics, and the system comprises:

generating means for generating a plurality of sequences with a predetermined length randomly;
computing means for computing a specific parameter value of each sequence and selecting a plurality of sequences whose computed specific parameter value accords with a certain condition;
genetic adaptive mutation means for performing adaptive genetic mutation on sequences and adaptively selecting sequences with the mutated and optimized specific parameter value according to the probability;
cyclic control means for controlling the number of cycle times of process from the computing means to the genetic adaptive mutation means; and
selecting means for selecting the sequences with the optimal specific parameter value among the final sequences as the output sequences.

A genetic crossover over operation means exists between the computing means and the genetic adaptive mutation means, for performing the crossover over operation on the selected plurality of sequences and sending the processed sequences to the genetic adaptive mutation means.
According to the present invention, sequences with specific characteristics can be designed. And the present invention is highly adaptive and feasible. Sequences applicable in many fields can be designed through specifying the

**EP 1 758 285 A1**

evaluation indicator function corresponding to the specific characteristic.

The preferable embodiment of the present invention will be described with reference to the drawings. And the other features, purposes and effects of the present invention will become apparent.

Brief Description of the Drawings

The preferable embodiment of the present invention will be described with reference to the drawings, wherein:

Figure 1 is the overall flow diagram showing the method for generating sequences with specific characteristics according to the present invention;
Figure 2 is the schematic diagram showing the random generated sequences;
Figure 3 is the schematic diagram showing the genetic selection operation of the sequences;
Figure 4 is the schematic diagram showing the genetic crossover over operation operation of the sequences;
Figure 5 is the schematic diagram showing the adaptive mutation operation of the sequences;
Figure 6 is the schematic diagram showing the operation of whether adopting the mutated sequences;
Figure 7 is the schematic diagram showing the mutation operation of the sequences.
Figure 8a is the curve diagram showing the aperiodic autocorrelation function of Golay code in prior art.
Figure 8b is the curve diagram showing the aperiodic autocorrelation function of SYNC according to the present invention;
Figure 9 is the block diagram showing the system for generating sequences with specific characteristics according to the present invention.

The same reference sign represents the same, similar of corresponding features or functions in the above drawings.

Detailed Description of the Invention

The present invention will be further described with reference to the drawings.

The embodiment of the present invention will be described with reference to the method for generating the binary downlink synchronization sequence in TD-SCDMA. Of course, the present invention is not limited to this embodiment for one skilled in the art. The present invention can generate sequences in other communication system, such as the uplink or downlink synchronization sequence of CDMA2000, WCDMA or WiMax. Of course, the present invention can generate sequences for other purposes.

The first step of the mobile station accessing the system is to synchronize with the current optimal cell. This process is implemented through capturing the downlink synchroniztion sequence (SYNC) transmitted by the cell in the downlink pilot slot. In the TD-SCDMA system, SYNC is a 64-bit sequence predetermined by the system, and has 32 different SYNC codes. The neighbouring cells in the system choose different SYNC sequences and SYNC sequences of the unneighbored cells can be multiplexed. According to the architecture of the TD-SCDMA wireless frame, the SYNC is sent every 5ms. When the mobile station accesses the system, the 32 SYNC sequences are searched one by one (i.e. correlating the received signals with the 32 probable SYNC sequences code by code), and the sequence with the largest correlation peak is regarded as the SYNC used in the current cell. At the same time, the timing of the downlink of the system can be preliminarily determined according to the time position of the correlated peak.

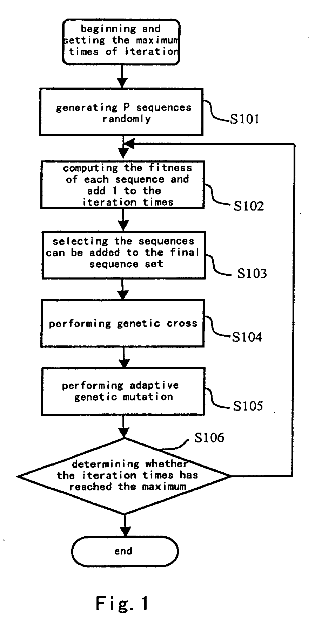

Figure 1 is the flow diagram showing the method for generating sequences with specific characteristics according to the embodiment of the present invention, i.e., the flow diagram showing the generation of the SYNC sequence with good correlation characteristics.

Firstly, the maximum number of iteration is set and the initial value of the number of iteration is 0. The maximum number of iteration can be specifically set according to the storage capacity of the computing equipment and the CPU speed, such as 10,000 times, 100,000 times or more. The higher the iterative number is, the better the characteristics of the computed sequences are. Then, the method proceeds to the following steps:

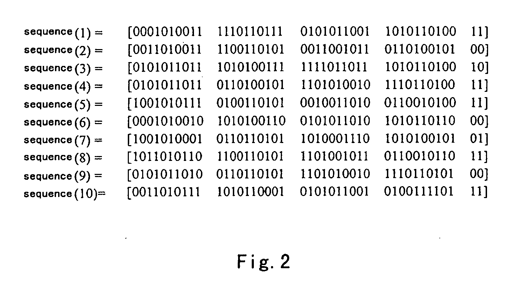

In the step S101, P sequences are generated randomly. Figure 2 shows an example of randomly generated sequences, in which 10 binary sequences, each with the length of 42, are generated, wherein every sequence is comprised of 0 and 1 (in practice, 0 in the sequence is -1 and 1 is 1, i.e., -1 and 1 comprise the sequences in practical use.) and has a serial number. Of course, the value of P may be far bigger than 10 in practice and the length of the sequence may be longer than 42, such as of 64, 128, 256 or even longer length at will.

The value of P can be determined according to conditions, such as, the storage capacity of the computing equipment and the CPU speed, etc.. The principle is that the bigger the value of P is, the better the result will be. However, when P exceeds a certain value, the improvement of the result will be limited. In the embodiment of the present invention, P=500.

4

In addition, the length L of each sequence can be any value. In the embodiment of the present invention, the length of each SYNC sequence is 64.

In the step S102, the fitness of each sequence is computed and the iteration number is increased by 1.

The fitness is an evaluation indicator, which can be designated by the user and represents the fitness of each sequence to the specific characteristic. If the user requires for a sequence with a specific characteristic, the corresponding fitness can be designated.

In the embodiment of the present invention, the evaluation indicator for the fitness adopted by each sequence is:

$$fitness(\mathrm{j}) = \sum_{\tau=1}^{L-1} \theta_{u,u}(\tau)^2 + \beta \cdot PSL_{\mathrm{j}}^2 \qquad 0 \le \mathrm{j} \le P\text{-}1 \qquad (1)$$

$$\theta_{u,u}(\tau) = \sum_{t=0}^{L-1-\tau} u(t)u(t+\tau) , \quad PSL_{j} = \max \theta_{u,u}(\tau)^2$$

Wherein $\theta_{u,u}(\tau)$ is the autocorrelation function for each sequence, L is the length of each sequence, and $PSL_j$ is the largest sidelobe value of each sequence, and $\beta$ is the equilibrium coefficient for balancing the sum of the peak sidelobe with the autocorrelation value. The $\beta$ is related with the length of the sequence and in the embodiment of the present invention, $\beta$ is $\sqrt{64} = 8$ for the SYNC. Of course, the value of $\beta$ can be other values according to the specific requirements. Since the formulae of computing the sequence autocorrelation and the peak sidelobe are known to those skilled in the art, they will not be illustrated in detail here.

The formula for computing the fitness of the sequence has been provided above and the computation of a sequence with the length of 5 bits is explained as the following:

The sequence code is [11111]
The computation of its aperiodic autocorrelation function is:

with one bit shifted:

$$[1 \quad 1 \quad 1 \quad 1 \quad 1]$$
$$[1 \quad 1 \quad 1 \quad 1 \quad 1]$$

$$1*1+1*1+1*1+1*1=4$$

with two bits shifted:

$$[1 \quad 1 \quad 1 \quad 1 \quad 1]$$
$$[1 \quad 1 \quad 1 \quad 1 \quad 1]$$

$$1*1+1*1+1*1=3$$

with three bits shifted:

$$[1 \quad 1 \quad 1 \quad 1 \quad 1]$$

$$1*1+1*1=2$$

with three bits shifted:

$$[1 \quad 1 \quad 1 \quad 1 \quad 1]$$

$$1*1=1$$

By analogy, the aperiodic autocorrelation function is [4 3 2 1 ].

The peak sidelobe PSL=4, assuming $\beta$=1.

And the adaptive function

$$fitness(\text{j}) = \sum_{\tau=1}^{L-1} \theta_{u,u}(\tau)^2 + \beta \cdot \text{PSL}^2$$

$$= (4*4+3*3+2*2+1*1)+1*4*4 = 46$$

Obviously, the less the fitness (j) is, the better the autocorrelation characteristic of the sequence is. Therefore, in the embodiment of the present invention, the less the fitness (j) is, the better the characteristic of the sequence is.

After the step S102, the genetic selection is done in the step S103 to determine the sequence which can evolve to the population of the next generation.

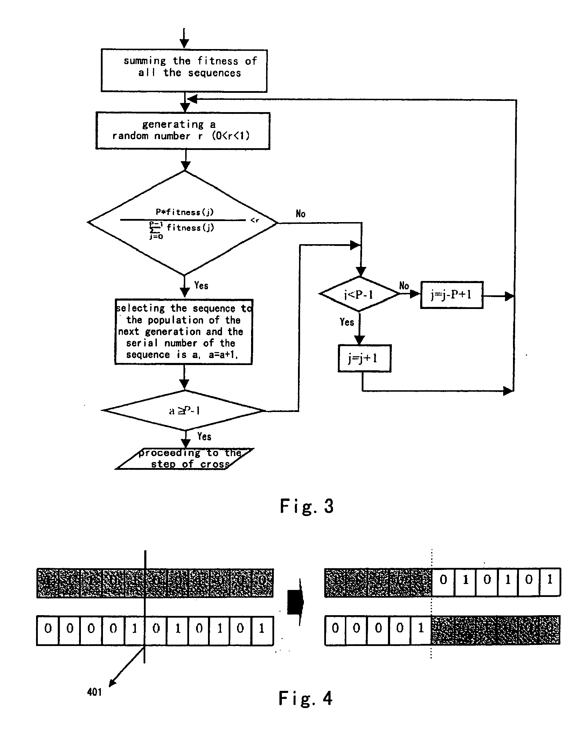

As described above, since the fitness indicates the degree of adaptiveness of a sequence to the environment, i.e., the degree of satisfying the users' need, the sequence with a higher fitness conforms to the environment better. In the present embodiment, a sequence with a good autcorrelation characteristic is needed, i.e., the sequence with a small fitness (j) is needed. The smaller the autocorrelation function is, the better it can be adaptive to the environment, i.e., the fitness is bigger (If a sequence with a bad autocorrelation characteristic is needed, it will be better to choose one with a big fitness. The sequence is selected in accordance with the practical condition.). According to the Darwin's evolutionism, the sequence has a better chance to exist and be passed down to the next generation. According to the embodiment of the present invention, the sequences are queued according to the fitness, and the one with the biggest fitness is put on the utmost top and the one with the smallest fitness is put on the utmost bottom. Figure 3 describes the detailed strategy, including the following steps:

1) Summing the fitness of all the sequences in the population to be selected (the population to be selected is the one created last time and the original population to be selected in the one comprised by the initially generated P sequences), i.e., computing the value of $\sum_{j=0}^{P-1} fitness(j)$, and at the same time setting the initial values of j and a as 0, wherein j is the serial number of the sequence in the population to be selected and a is the number of iteration in step S103. If P sequences are selected for one time, the biggest value of a is P-1; if one sequence is selected for one time, the current value of a is the serial number of the selected sequence in the new population.

2) Generating a random number r, wherein 0<r<1;

3) Computing $\dfrac{P * fitness(j)}{\sum\limits_{j=0}^{P-1} fitness(j)}$, if the result is less than r, putting the sequence to the next generation population and setting the serial number of the selected sequence in the new population to a and then computing a=a+1 and proceeding to the step 4); if the result is equal to or bigger than r, determining the current value of j, computing j=j+1 if j<P-1 and computing j=j-P+1 if j is equal to or bigger than P-1, and then returning to step 2); and thus the sequence in the next operation becoming the next sequence and operating each sequence with this cycle order;

4) Determining whether the current serial number a is bigger than or equal to P-1, if yes, proceeding to step S104 for genetic crossover over operation; if no, determining the current value of j, computing j=j+1 if j<P-1 and computing j=j-P+1 if j is equal to or bigger than P-1, and then returning to step 2).

In the present invention, the smaller the autocorrelation function is (the smaller the fitness is in formula (1)), the better chance the sequence will be selected, which fully reflects the basic idea of "survival of the fittest" of the evolutionism. The number of the selected sequences in the present embodiment is P also, however, the number doesn't need to be the same with the number of the initial generated sequences and it can be either bigger than P or smaller than P. The newly selected population can include a plurality of the same sequences and the sequence with a smaller autocorrelation function will have a better chance to be selected for more times.

After the fitness of each sequence in the selected population is obtained according to the embodiment of the present invention, the step S104 will be taken to get the next generation population by performing the genetic crossover over operation. The process is performed in the genetic crossover over operation apparatus 93, which randomly selects the individuals in the population to perform the pairwise genetic crossover. Figure 4 explains the basic operations of genetic crossover, which intersects the two sequences and separates each individual into two segments at the crossover point; the segments of different individual is combined at the crossover point; the crossover point 401 can be selected randomly.

Then, the adaptive genetic mutation S105 is taken to determine whether a certain sequence needs to be adaptively mutated. The process is performed in the genetic adaptive mutation means 94.

In the embodiment of the present invention, for every sequence, a random number r between 0 and 1 is generated during each time of iteration. The following formula is used to determine whether a sequence needs to be mutated.

$$\frac{P * fitness(j)}{\sum\limits_{j=0}^{P-1} fitness(j)} > r \qquad (2)$$

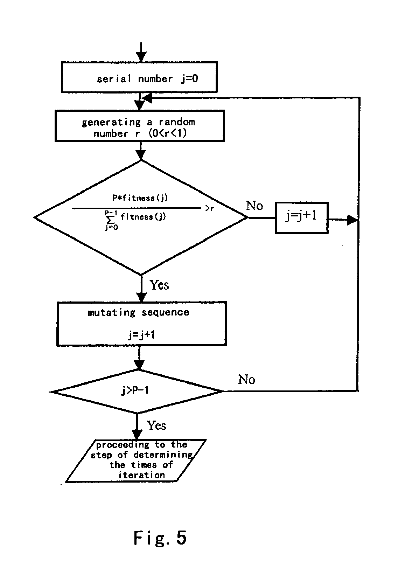

The meaning of the symbols in the formula is the same as those described above. When the above formula (2) is satisfied, the fitness (j) of the sequence is comparatively high, i.e., the autocorrelation function is comparatively big and since the sequence with a comparatively low autocorrelation function is needed, the sequence should be mutated; however, when the above formula (2) is not satisfied, the fitness (j) of the sequence is comparatively small, i.e., the autocorrelation function is comparatively small so the sequence has a comparatively good characteristic and need not be mutated. Figure 5 explains the above process in detail and the steps are as following:

1) Setting the initial value of the serial number j to 0;
2) Generating a random number r, wherein 0<r<1;
3) Determining whether the result of

$$\frac{P * fitness(j)}{\sum\limits_{j=0}^{P-1} fitness(j)}$$

is bigger than r;

4) If the result is bigger than r, mutating the sequence and computing j=j+1 with the serial number unchanged; proceeding to step 5); if the result is smaller than r, computing j=j+1 and returning to step 2);
5) Determining whether j is bigger than P-1;
6) If j is bigger than P-1, proceeding to step 7); if j is equal to or smaller than P-1, returning to step 2);
7) Determining whether the iterative times has reached the maximum number, if not, returning to step S102; if yes, selecting in the selecting means 95. The selection includes the following process:

(1) Computing the fitness of all the sequences in the population obtained after the selection of maximum iterative times, genetic crossover and adaptive mutation;
(2) Comparing the values of the fitness of all the sequences and selecting the sequence with the smallest fitness as the output sequence (If there are more than one sequence with the smallest fitness, selecting one randomly as the output sequence.); and then the flow of generating the sequence ended.

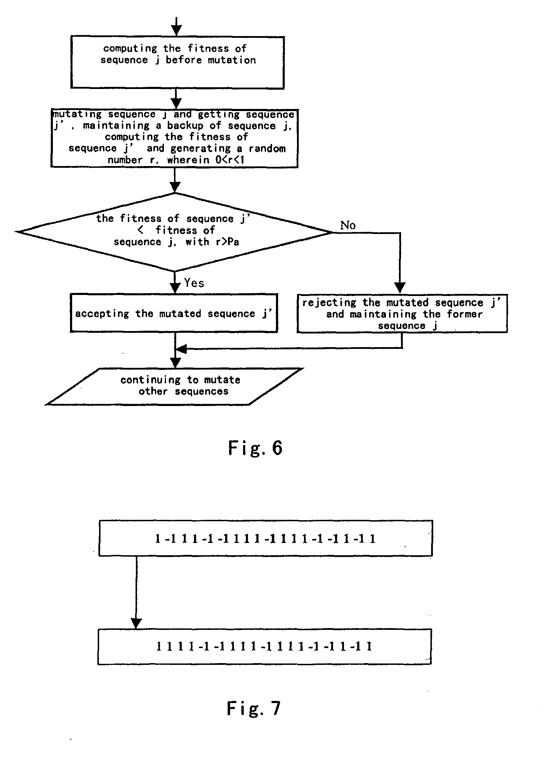

It is necessary to select in the mutated sequences since mutation may bring better sequences and also may bring worse ones. Figure 6 shows the strategy to select the mutated sequences. If the mutated sequences are better, they have better opportunities to be selected but if the mutated sequences are worse, they have worse opportunities to be selected. $P_a$ is a fixed value set according to the requirement, which represents the probability of changing mutation and $P_a$ = 0.1 in the present invention. The strategy to select is as follows:

1) Computing the fitness of the sequence j before mutation;
2) Mutating the sequence j and getting sequence j' while maintaining a backup of sequence j, computing the fitness of the sequence j' and generating a random number r, wherein 0<r<1;
3) Determining whether the fitness of the sequence j' is less than that of the sequence j, with r> $P_a$;
4) If yes, accepting the mutated sequence j'; if no, rejecting the mutated sequence j' and maintaining the former sequence j;
5) Continuing to mutate other sequences.

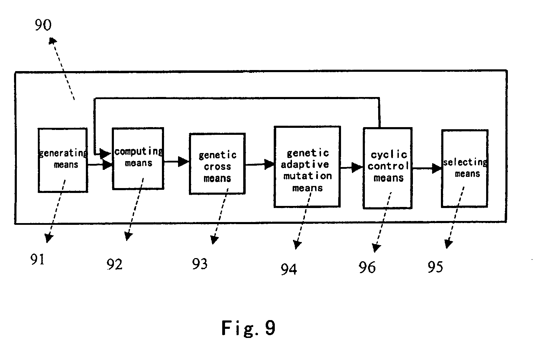

In the embodiment of the present invention, the mutation operation of the sequence is very simple, i.e. changing the sign of a random bit in the sequence such as changing negative 1 to positive 1 or positive 1 to negative 1. Figure 7 shows the mutation operation. The mutation point can be selected randomly.
Those skilled in the art will find the step 103, in which the sequences can be added to the final sequence set are selected, i.e. the fitness of each sequence is computed, can be performed before the genetic crossover step S104 and also can be performed after the genetic adaptive mutation step S 105, i.e., the sequences selected from the P sequences are added to the final sequence set after the maximum number of iteration.
Those skilled in the art will also find the sequences with less fitness can be added to the final sequence set according the fitness of each sequence without the above condition for adding it to the final sequence set.
Those skilled in the art will also find different mutation probabilities, mutation methods and mutation strategies of sequences can be selected according to the practical situation.
Currently, the SYNC sequence used in TD-SCDMA is Golay code.

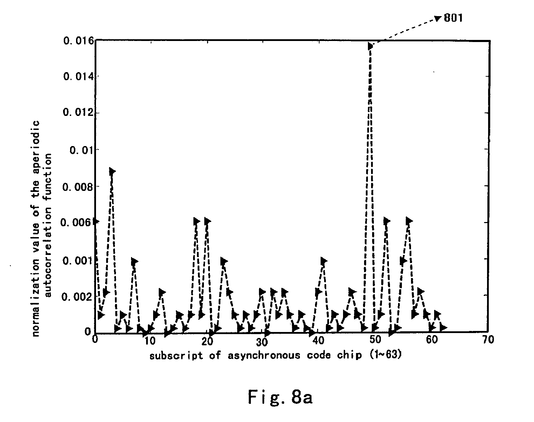

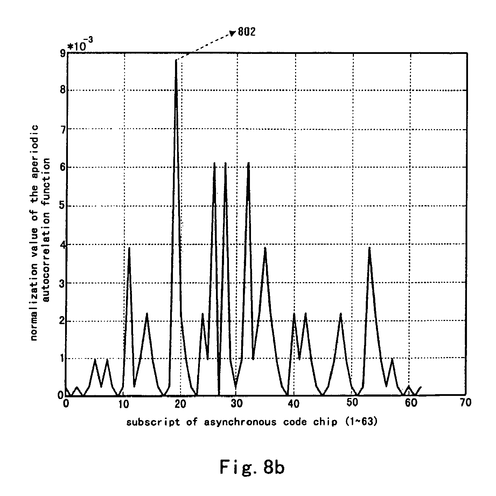

Figure 8a and figure 8b are the curve diagrams showing the aperiodic autocorrelation function of SYNC and Golay code respectively according the embodiment of the present invention, wherein the ordinate represents the normalized value of the aperiodic autocorrelation function and the abscissa represents the off-peak autocorrelation index. Figure 8a shows the maximum normalized value of the autocorrelation function of Golay code is 0.0158 (reference sign 801) and the corresponding gain is -18.0610dB; figure 8b shows the maximum normalized value of the autocorrelation function of SYNC is 0.0088 (reference sign 802) according to the embodiment of the present invention and the corresponding gain is -20.5606 dB, so the difference between the peak sidelobe values of SYNC and Golay code in the present invention (i.e. the relative gain according to the embodiment of the present invention) is (-18.0610)-(-20.5606) =2.4996dB.
As shown in Figure 9, the system 90 has generating means 91, which is used to generate at least one random sequence such as P sequences; computing means 92, which is used to compute the fitness of sequences according to the designated evaluation indicator corresponding to the specific characteristic; and selecting means 95, which is used to select the specific sequences among the sequences in accordance with the requirements of the user. The selecting means 95 can select the specific sequences among the sequences according to the fitness of each sequence or according to the specific characteristic of each sequence (evaluation indicator for the fitness).
The system 90 may also have genetic crossover means 93, adaptive genetic mutation means 94, which are used to perform genetic crossover and adaptive mutation on the sequences according to the fitness computed by the computing means 92; the system 90 may also have repetition control means 96, which is used to control the repetition times of the processes from the computing means and the genetic crossover means to the genetic adaptive mutation means and to send the sequences obtained after cycling to the selecting means 95.

In figure 9, sequences pass the computing means 92, the genetic crossover means 93 and the genetic mutation means 94 for several times and finally the selecting means 95 determines the output sequences.

The above is only the preferred embodiment of the present invention. It should be noted that those skilled in the art might make improvements and modifications. It is intended that the invention be construed as including all such improvements and modifications insofar they come within the scope of the appended claims or the equivalents thereof.

## Claims

1. A method for generating sequences, wherein the sequences are used in a communication system and the method comprises following steps:

    1) generating a plurality of sequences with a predetermined length randomly;
    2) computing a specific parameter value of each sequence;
    3) selecting a plurality of sequences whose computed specific parameter value accords with a certain condition;
    4) mutating the selected sequences with an adaptive genetic algorithm and adaptively selecting the sequences with the mutated and optimized specific parameter value according to the probability;
    5) repeating setp 2) to step 4) until a predetermined number of times and selecting the sequences with the optimal specific parameter value among the final sequences as output sequences.

2. The method for generating sequences as defined in claim 1, wherein, between the step 3) and 4), crossover over operation on the selected plurality of sequences is performed.

3. The method for generating sequences as defined in claim 1, wherein, the specific parameter is relative to the autocorrelation function.

4. The method for generating sequences as defined in claim 2, wherein, the specific parameter is relative to the autocorrelation function.

5. The method for generating sequences as defined in any one of claims 1-3, wherein, the specific parameter is the fitness and its computation formula is:

$$fitness(\mathrm{j}) = \sum_{\tau=1}^{L-1} \theta_{u,u}(\tau)^2 + \beta \cdot PSL_{\mathrm{j}}^2 \qquad 0 \leq \mathrm{j} \leq \mathrm{P}\text{-}1$$

$$\theta_{u,u}(\tau) = \sum_{t=0}^{L-1-\tau} u(t)u(t+\tau), \qquad PSL_j = \max \theta_{u,u}(\tau)^2$$

wherein $\theta_{u,u}(\tau)$ is the autocorrelation function of each sequence, j is the serial number of the sequence, P is the size of the sequences, L is the length of each sequence, $PSL_j$ is the peak sidelobe value of each sequence and $\beta$ is the equilibrium coefficient for balancing the peak sidelobe with the sum of the autocorrelation value.

6. The method for generating sequences as defined in any one of claims 1-3, wherein, the adaptive genetic mutation step comprises following steps:

    a) computing the fitness of a sequence j before mutation;
    b) mutating the sequence j and getting a sequence j' while maintaining a backup of the sequence j, computing the fitness of the sequence j' and generating a random number r, wherein 0<r<1;
    c) determining whether the fitness of the sequence j' is less than that of the sequence j, with r>$P_a$;
    d) if yes, accepting the mutated sequence j'; if no, rejecting the mutated sequence j' and maintaining the former sequence j;
    e) repeating steps a) to d) and continuing to mutate other sequences;

wherein j is the serial number of the sequence, $P_a$ is a predetermined value.

7. The method for generating sequences as defined in claim 5, wherein, the adaptive genetic mutation includes the following steps:

a) computing the fitness of a sequence j before mutation;
b) mutating the sequence j and getting a sequence j' while maintaining a backup of the sequence j, computing the fitness of the sequence j' and generating a random number r, wherein O<r<1;
c) determining whether the fitness of the sequence j' is less than that of the sequence j, with r>$P_a$;
d) if yes, accepting the mutated sequence j'; if no, rejecting the mutated sequence j' and maintaining the former sequence j;
e) repeating steps a) to d) and continuing to mutate other sequences;

wherein j is the serial number of the sequence, $P_a$ is a predetermined value.

8. The method for generating sequences as defined in claim 5 or 7, wherein, the step 3) may include the following steps:

I) generating a random number r, and setting the initial numbers of integers a and j as 0, wherein 0<r<1;

II) computing $\dfrac{P * fitness(j)}{\sum\limits_{j=0}^{P-1} fitness(j)}$ , if the result is less than r, putting the sequence to the next generation population and setting the serial number of the selected sequence in the new population to a and then computing a=a+1 and proceeding to step III); if the result is equal to or bigger than r, determining the current value of j, if j<P-1, computing j+1; if j is equal to or bigger than P-1, computing j=j-P+1; and then returning to step I); and thus the sequence in the next operation becoming the next sequence and operating each sequence with this cycle order;

III) determining whether the current serial number a is bigger than or equal to P-1, if yes, proceeding to step 4); if no, determining the current value of j, if j<P-1, computing j=j+1; if j is equal to or bigger than P-1, computing j=j-P+1; and then returning to step I).

9. The method for generating sequences as defined in claim 2, wherein, the crossover point of the crossover over operation is selected randomly.

10. The method for generating sequences as defined in any one of claims 1-4, wherein, the sequences are downlink synchronization sequences in the wireless communication system.

11. The method for generating sequences as defined in claim 5, wherein, the sequences are downlink synchronization sequences in the wireless communication system.

12. The method for generating sequences as defined in claim 6, wherein, the sequences are downlink synchronization sequences in the wireless communication system.

13. The method for generating sequences as defined in claim 7, wherein, the sequences are downlink synchronization sequences in the wireless communication system.

14. The method for generating sequences as defined in claim 8, wherein, the sequences are the downlink synchronization sequences in the wireless communication system.

15. The method for generating sequences as defined in any one from claim 1 to claim 4, wherein, the sequences are the uplink synchronization sequences in the wireless communication system.

16. The method for generating sequences as defined in claim 5, wherein, the sequences are the uplink synchronization sequences in the wireless communication system.

17. The method for generating sequences as defined in claim 6, wherein, the sequences are the uplink synchronization sequences in the wireless communication system.

**18.** The method for generating sequences as defined in claim 7, wherein, the sequences are the uplink synchronization sequences in the wireless communication system.

**19.** The method for generating sequences as defined in claim 8, wherein, the sequences are the uplink synchronization sequences in the wireless communication system.

**20.** An apparatus for generating sequences, wherein the sequences are used in the communication system and the apparatus comprises:

generating means for generating a plurality of sequences with a predetermined length randomly;
computing means for computing a specific parameter value of each sequence and selecting a plurality of sequences whose computed specific parameter value accords with a certain condition;
genetic adaptive mutation means for performing adaptive genetic mutation on sequences and adaptively selecting sequences with the mutated and optimized specific parameter value according to the probability;
cyclic control means for controlling the number of cycle times of process from the computing means to the genetic adaptive mutation means;
selecting means for selecting the sequences with the optimal specific parameter value among the final sequences as the output sequences.

**21.** The apparatus for generating sequences as defined in claim 20, further comprising genetic crossover over operation means which exists between the computing means and the genetic adaptive mutation means, for performing crossover over operation on the selected plurality of sequences and sending the processed sequences to the genetic adaptive mutation means.

**22.** The apparatus for generating sequences as defined in claim 20, wherein, the specific parameter is relative to the autocorrelation function.

**23.** The apparatus for generating sequences as defined in claim 21, wherein, the specific parameter is relative to the autocorrelation function.

**24.** The apparatus for generating sequences as defined in any one of claims 20-22, wherein, the specific parameter is the fitness and its computation formula is:

$$fitness(\text{j}) = \sum_{\tau=1}^{L-1} \theta_{u,u}(\tau)^2 + \beta \cdot \text{PSL}_\text{j}^2 \qquad 0 \le \text{j} \le \text{P-1}$$

$$\theta_{u,u}(\tau) = \sum_{t=0}^{L-1-\tau} u(t)u(t+\tau), \qquad PSL_j = \max \theta_{u,u}(\tau)^2$$

wherein $\theta_{u,u}(\tau)$ is the autocorrelation function of each sequence, j is the serial number of the sequence, P is the whole number of the sequences, L is the length of each sequence, $PSL_j$ is the peak sidelobe value of each sequence and $\beta$ is the equilibrium coefficient for balancing the sum of the peak sidelobe with the autocorrelation value.

**25.** The apparatus for generating sequences as defined in claim 21, wherein, the crossover point of the crossover over operation is selected randomly.

**26.** The apparatus for generating sequences as defined in any one of claims 20-23, wherein, the sequences are the downlink synchronization sequences in the wireless communication system.

**27.** The apparatus for generating sequences as defined in claim 24, wherein, the sequences are the downlink synchronization sequences in the wireless communication system.

**28.** The apparatus for generating sequences as defined in claim 25, wherein, the sequences are the downlink synchronization sequences in the wireless communication system.

**29.** The apparatus for generating sequences as defined in any one of claims 20-23, wherein, the sequences are the uplink synchronization sequences in the wireless communication system.

**30.** The apparatus for generating sequences as defined in claim 24, wherein, the sequences are the uplink synchronization sequences in the wireless communication system.

**31.** The apparatus for generating sequences as defined in claim 25, wherein, the sequences are the uplink synchronization sequences in the wireless communication system.

```
                        ┌─────────────────────┐
                        │   beginning  and    │
                        │ setting the maximum │
                        │  times of iteration │
                        └─────────────────────┘
                                   │
                                   ▼
                        ┌─────────────────────┐
                        │  generating P sequences │────── S101
                        │       randomly      │
                        └─────────────────────┘
                                   │
                                   ▼
                        ┌─────────────────────┐
                        │ computing the fitness│
                        │  of each sequence and│
                        │      add 1 to the    │────── S102
                        │    iteration times   │
                        └─────────────────────┘
                                   │
                                   ▼
                        ┌─────────────────────┐
                        │ selecting the sequences│
                        │ can be added to the final│
                        │     sequence set     │────── S103
                        └─────────────────────┘
                                   │
                                   ▼
                        ┌─────────────────────┐
                        │ performing genetic cross│────── S104
                        └─────────────────────┘
                                   │
                                   ▼
                        ┌─────────────────────┐
                        │  performing adaptive │
                        │   genetic mutation   │────── S105
                        └─────────────────────┘
                                   │          S106
                                   ▼
                             ◇─────────────◇
                            ╱  determining whether ╲
                           ╱  the iteration times has ╲
                           ╲  reached the maximum   ╱
                            ╲─────────────────────╱
                                   │
                                   ▼
                        ╭─────────────────────╮
                        │         end         │
                        ╰─────────────────────╯
```

Fig. 1

sequence (1) = [0001010011  1110110111  0101011001  1010110100  11]
sequence (2) = [0011010011  1100110101  0011001011  0110100101  00]
sequence (3) = [0101011011  1010100111  1111011011  1010110100  10]
sequence (4) = [0101011011  0110100101  1101010010  1110110100  11]
sequence (5) = [1001010111  0100110101  0010011010  0110010100  11]
sequence (6) = [0001010010  1010100110  0101011010  1010110110  00]
sequence (7) = [1001010001  0110110101  1010001110  1010100101  01]
sequence (8) = [1011010110  1100110101  1101001011  0110010110  11]
sequence (9) = [0101011010  0110110101  1101010010  1110110101  00]
sequence (10)= [0011010111  1010110001  0101011001  0100111101  11]

# Fig. 2

summing the fitness of
all the sequences

generating a
random number r (0<r<1)

$$\frac{P*fitness(j)}{\sum_{j=0}^{P-1}fitness(j)} < r$$

No

Yes

selecting the sequence to
the population of the
next generation and the
serial number of the
sequence is a, a=a+1,

i<P-1

No

j=j-P+1

Yes

j=j+1

a ≥P-1

Yes

proceeding to the
step of cross

Fig. 3

401

| 0 | 0 | 0 | 0 | 1 | 0 | 1 | 0 | 1 | 0 | 1 |

| | | | 0 | 1 | 0 | 1 | 0 | 1 |

| 0 | 0 | 0 | 0 | 1 | | | |

Fig. 4

serial number j=0

generating a random
number r (0<r<1)

$$\frac{P*fitness(j)}{\sum_{j=0}^{P-1} fitness(j)} > r$$

No → j=j+1

Yes

mutating sequence

j=j+1

j>P-1

No

Yes

proceeding to the
step of determining
the times of
iteration

Fig. 5

computing the fitness of
sequence j before mutation

mutating sequence j and getting sequence
j' , maintaining a backup of sequence j,
computing the fitness of
sequence j' and generating a random
number r, wherein 0<r<1

the fitness of sequence j'
< fitness of
sequence j, with r>Pa

No

Yes

accepting the mutated sequence j'

rejecting the mutated sequence j'
and maintaining the former
sequence j

continuing to mutate
other sequences

Fig. 6

1 -1 1 1 -1 -1 1 1 1 -1 1 1 1 -1 -1 1 1 -1 1

1 1 1 1 -1 -1 1 1 1 -1 1 1 1 -1 -1 1 1 -1 1

Fig. 7

Fig. 8a

Fig. 8b

90

| generating means | computing means | genetic cross means | genetic adaptive mutation means | cyclic control means | selecting means |

91    92    93    94    96    95

Fig. 9

**European Patent Office**

## EUROPEAN SEARCH REPORT

Application Number

EP 06 01 7791

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 5 963 584 A (BOULANGER CHRISTOPHE [FR] ET AL) 5 October 1999 (1999-10-05)<br>* abstract *<br>* column 1, line 7 - line 22 *<br>* column 5, line 61 - column 7, line 11 *<br>* column 7, line 27 - line 37 *<br>* column 8, line 17 - line 25 *<br>* column 11, line 51 - column 12, line 43; claims 1,8 *<br>----- | 1-31<br><br>5 | INV.<br>H04J13/04<br><br>ADD.<br>H04J13/00 |
| X | NATARAJAN B ET AL: "Design of optimal complex spreading codes for DS-CDMA using an evolutionary approach"<br>GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE,<br>vol. 6, 29 November 2004 (2004-11-29), pages 3882-3886, XP010758463<br>ISBN: 0-7803-8794-5<br>* the whole document *<br>----- | 1-31 | |
| X | EL-KHAMY S E ET AL: "Optimization of chaotic spreading codes for asynchronous DS-CDMA applications using genetic algorithms"<br>RADIO SCIENCE CONFERENCE, 2005. NRSC 2005. PROCEEDINGS OF THE TWENTY-SECOND NATIONAL CAIRO, EGYPT MARCH 15-17, 2005, PISCATAWAY, NJ, USA,IEEE,<br>15 March 2005 (2005-03-15), pages 205-216, XP010833688<br>ISBN: 977-503183-4<br>* sections I, III, IV, V, VI; figure 3. *<br>-----<br><br>-/-- | 1-31 | TECHNICAL FIELDS SEARCHED (IPC)<br><br>H04J |

The present search report has been drawn up for all claims

| Place of search | Date of completion of the search | Examiner |
|---|---|---|
| The Hague | 4 December 2006 | Nilsson, Martin |

EPO FORM 1503 03.82 (P04C01)

**European Patent Office**

**EUROPEAN SEARCH REPORT**

Application Number

EP 06 01 7791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|----------|------------------------------------------------------------------------------|-------------------|------------------------------------------|
| A | PIRLOT M: "GENERAL LOCAL SEARCH METHODS" EUROPEAN JOURNAL OF OPERATIONAL RESEARCH, AMSTERDAM, NL, vol. 92, no. 3, 9 August 1996 (1996-08-09), pages 493-511, XP002038263 ISSN: 0377-2217 * page 501, right-hand column, line 37 - page 506, right-hand column, line 24 * ----- | 1-31 | |

|  |  |  | TECHNICAL FIELDS SEARCHED (IPC) |
|--|--|--|---------------------------------|

The present search report has been drawn up for all claims

| Place of search | Date of completion of the search | Examiner |
|-----------------|----------------------------------|----------|
| The Hague | 4 December 2006 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 01 7791

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2006

| Patent document cited in search report | | Publication date | Patent family member(s) | | Publication date |
|---|---|---|---|---|---|
| US 5963584 | A | 05-10-1999 | EP | 0845887 A1 | 03-06-1998 |
| | | | FR | 2756692 A1 | 05-06-1998 |

EPO FORM P0459

For more details about this annex : see Official Journal of the European Patent Office, No. 12/82